# EUROPEAN PATENT APPLICATION

(11) **EP 4 647 055 A1**
(43) Date of publication of application: **12.11.2025**
(21) Application number: 25175469.3
(22) Date of filing: 09.05.2025
(51) Int. Cl.: A61G 7/05, A61G 1/048

(54) **STOWABLE PUSH HANDLE AND SIDERAIL LATCH PIN MECHANISMS FOR PATIENT SUPPORT APPARATUS**

(30) Priority: 10.05.2024 US 202463645459 P
(71) Applicant: Hill-Rom Services, Inc., Batesville, IN 47006-9167 (US)
(72) Inventor: DOZAL, Omar H., Batesville, 47006 (US); HEIDLAGE, John Karl, Batesville, 47006 (US); WEILER, Martin, Batesville, 47006 (US)
(74) Representative: Reddie & Grose LLP

(57) **Abstract**

A patient support apparatus includes push handles that enable in moving and positioning the support apparatus based on patient needs. The present disclosure is also directed to systems and methods for efficient manufacturing and enhancing the use of the push handles. The patient support apparatus includes siderails that can be maneuvered to a vertical position with latch pins manufactured by crimping.

## Description

The present disclosure relates to the use of patient support apparatus and their accessories. The present disclosure is also directed to systems and methods for efficient manufacturing and use of different components of the patient support apparatus.

Typically, such patient support apparatuses are used to provide a support surface for patients or other individuals for treatment, recuperation, or rest. Many such patient supports include a frame, a deck supported by the frame, a mattress, siderails configured to block egress of a patient from the mattress, and a controller configured to control one or more features of the bed.

Most of the patient support apparatus including hospital beds and stretchers are configured to have components that can propel the apparatus in forward and reverse directions. Such transport devices usually include some type of electrical input device and have handles than can trigger such electrical input devices. These transport devices need to be stowed when not in use so that they don't encumber caregiver access and or patient care. These transport devices need to be manufactured in an efficient and ergonomic way so as to improve patient care.

Similarly, most patient support apparatuses include siderails that ensure patient safety and improve patient care. The siderails typically include a rail member, a linkage configured to permit vertical movement of the rail member between a raised position and a lowered position, and a latching mechanism configured to retain the rail member in at least one of the raised position and the lowered position. It is important that the latch pins are manufactured and implemented in an efficient and error-free manner that is ideal for patient care.

Accordingly, the present disclosure is directed towards efficient methods of manufacturing components of the patient support apparatus. Further, the present disclosure is directed towards components that increase the efficiency and efficacy of the patient support apparatus. To improve costs, time, convenience, and patient's safety, the current disclosure describes systems and methods to improve patient care.

The present disclosure includes one or more of the features recited in the appended claims and/or the following features which, alone or in any combination, may comprise patentable subject matter.

According to a first aspect of the present disclosure, a patient support apparatus comprises a frame having multiple support sections including a head section, a seat section, a thigh section, and a foot section, wherein the frame supports the mattress and a push handle including a first tube configured to slide inside a second tube along a sliding slot located in the first tube. The push handle may be configured to be folded into a clearance notch about a pin positioned in the sliding slot when the push handle is stowed.

In some embodiments of the first aspect, the pin may be positioned off-center from an axis along which the first tube is configured to slide inside the second tube.

In some embodiments of the first aspect, the pin may be a slide pin.

In some embodiments of the first aspect, the first tube may not comprise welded components.

In some embodiments of the first aspect, the sliding slot may be cut with a tube laser.

In some embodiments of the first aspect, the first tube may be configured to be folded about the pin such that the angle between the first tube and the second tube may be less than 90 degrees when the push handle is stowed.

In some embodiments of the first aspect, the length of the push handle may be adjusted by sliding the first tube along the sliding slot into the second tube.

In some embodiments of the first aspect, the clearance notch is positioned at a top portion of the second tube, and wherein the top portion is the end through which the first tube slides into the second tube.

In some embodiments of the first aspect, the first tube may have a diameter smaller than the diameter of the second tube.

In some embodiments of the first aspect, the patient support apparatus may comprise an IV pole that includes a first component configured to slide inside a second component along a slot located in the first component.

According to a second aspect of the present disclosure, a patient support apparatus comprises a frame having multiple support sections including a head section, a seat section, a thigh section, and a foot section, wherein the frame supports the mattress, a siderail configured to be attached to the frame on a latching surface by one or more latch pins comprised of a first component and a second component. Each of the latch pins in the patient support apparatus is manufactured by a method not comprising welding.

In some embodiments of the second aspect, the second component may be a bracket, and the second component may be a shaft.

In some embodiments of the second aspect, the bracket may include a tab configured to secure the siderail in a vertical position.

In some embodiments of the second aspect, the shaft may include an engaging section configured to interact with a locking hook to secure the siderail in a vertical position.

In some embodiments of the second aspect, the latch pins may be manufactured by crimping.

In some embodiments of the second aspect, the latch pins may be manufactured by smashing the second component to displace material towards an inside diameter of the first component.

In some embodiments of the second aspect, the latching surface may not comprise any weld splatter.

According to a third aspect of the present disclosure, a method of manufacturing a latch pin comprises attaching a first component of the latch pin with second component of the latch pin and displacing material towards an outer surface of the second component or towards an inner diameter of the first component.

In some embodiments of the third aspect, the method may further comprise creating an interference between the first component and the second component.

In some embodiments of the third aspect, the first component may be a bracket and the second component may be a shaft.

In some embodiments of the third aspect, the method may not comprise welding.

In some embodiments of the third aspect, the method may comprise crimping.

The invention will now be further described by way of example with reference to the accompanying drawings, in which:
Fig. 1 is an embodiment of a patient support apparatus including a push handle;
Fig. 2 is an illustration of a push handle comprising a socket and a handle;
Fig. 3 is an illustration of a sliding slot in the handle of the push handle shown in Fig. 2;
Fig. 4 is an illustration of the push handle in a stowed position;
Fig. 5 is an illustration of a slide pin used to attach the handle to the socket of the push handle such that the handle is configured to be able to rotate about the slide pin;
Fig. 6 is an illustration of a latch pin used in a patient support;
Fig. 7 is an illustration of a tab of the latch pin configured to maintain the patient support apparatus in a vertical position,
Fig. 8 is a schematic showing the use of the latch pin in a latch assembly of the patient support apparatus;
Fig. 9 is an illustration of a latch pin comprising a shaft and a bracket crimped together;
Fig. 10 is a cross-section of the latch pin shown in Fig. 9; and

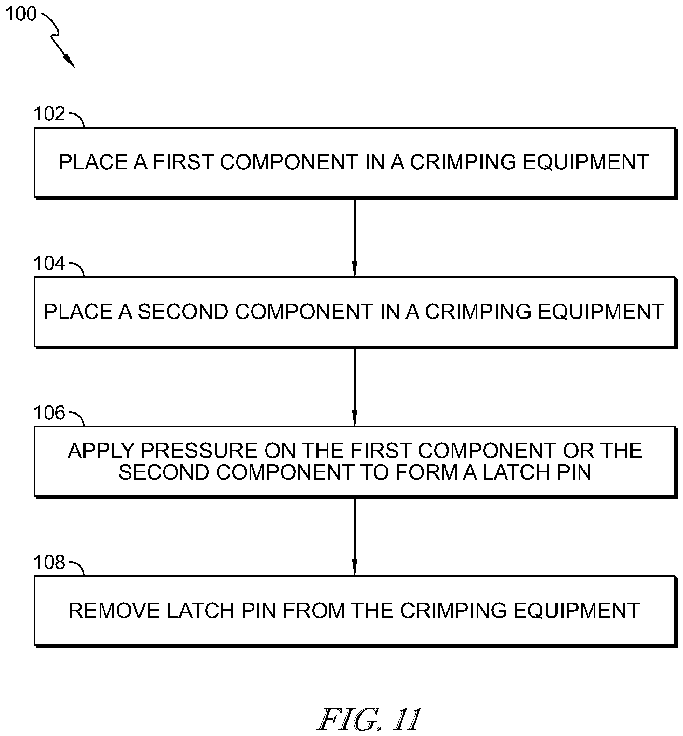

Fig 11 is a flowchart illustrating a method of manufacturing a crimped latch pin.

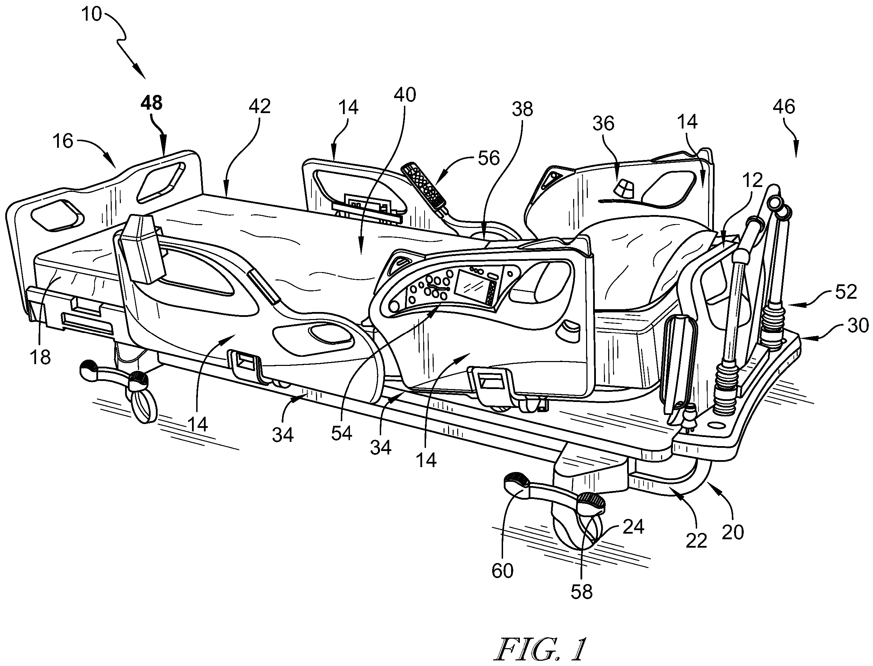

An illustrative patient support apparatus 10 embodied as a hospital bed is shown in Fig. 1. The bed 10 of Fig. 1 has a frame 20 which includes a base frame 22 supported on casters 24. The stationary base frame 22 further supports a weigh frame 30 that an adjustably positionable mattress support upper frame 34 supporting a mattress 18. The illustrative mattress 18 is an inflatable patient support surface which includes inflatable zones including a head zone 36, a seat zone 38, thigh zone 40, and a foot zone 42. The bed 10 further includes a headboard 12 at a head end 46 of the bed 10, a footboard 16 at a foot end 48 of the bed 10, and a movable siderails 14 coupled to the upper frame 34 of the bed 10. The bed 10 also includes a user interface 54 positioned on one of the siderails 14. The bed 10 of the embodiment of Fig. 1 is conventionally configured to adjustably position the upper frame 34 relative to the base frame 22 to adjust the position of a patient supported on the mattress 18.

Conventional structures and devices may be provided to adjustably position the upper frame 34, and such conventional structures and devices may include, for example, linkages, drives, and other movement members and devices coupled between base frame 22 and the weigh frame 30, and/or between weigh frame 30 and upper frame 34. Control of the position of the upper frame 34 and mattress 18 relative to the base frame 22 or weigh frame 30 is controlled, for example, by a patient control pendant 56 or user interface 54. The upper frame 34 may, for example, be adjustably positioned in a general incline from the head end 46 to the foot end 48 or vice versa. Additionally, the upper frame 34 may be adjustably positioned such that the head section 44 of the mattress 18 is positioned between minimum and maximum incline angles, e.g., 0-65 degrees, relative to horizontal or bed flat, and the upper frame 34 may also be adjustably positioned such that a seat section (not shown) of the mattress 18 is positioned between minimum and maximum bend angles, e.g., 0-35 degrees, relative to horizontal or bed flat. Those skilled in the art will recognize that the upper frame 34 or portions thereof may be adjustably positioned in other orientations, and such other orientations are contemplated by this disclosure.

To assist with the mobility of the patient support apparatus 10, push handles 52 are positioned at a head end 46 of the patient support apparatus 10. The push handles 52 in the embodiment of Fig. 1 are fixed to the upper frame 34 and the height of the push handles 52 is adjusted by adjusting the height of the upper frame 34 using a lift assembly. The patient support apparatus 10 may also include an oxygen tank holder that supports an oxygen tank. The orientation of the sides and ends of the patient support apparatus 10 is established by the orientation of a patient supported on the patient support apparatus 10 in a supine position such that a right siderail 14 is positioned to the patient's right and a left siderail 14 is positioned to the patient's left. The head end 46 is oriented at the end of the patient support apparatus 10 where a patient's head would be in a supine position.

The lift assembly is operated by a raise pedal 58 that may allow a user to manually activate the raise pedal 58 so that the lift assembly is raised. In some embodiments, the raise pedal 58 may require multiple activations to move the lift assembly, but in other embodiments, the lift assembly may be powered to actuate with a single activation of the raise pedal 58. A lower pedal 60 is actuable to cause the lift assembly to lower, thereby lowering the upper frame 34.

The patient support apparatus 10 includes a brake/steer mechanism supported by the base frame 22. The brake/steer mechanism is of the type known in the art and able to transition the operation of the casters 24 between a full lock that prevents rotation of the wheels of the caster 24 and prevents swiveling of the caster 24 about a vertical axis, a neutral position in which the casters 24 are free to rotate and swivel, and a steer position in which at least one of the casters 24 is locked in swivel to serve as a tracking wheel to assist with steering of the patient support apparatus 10.

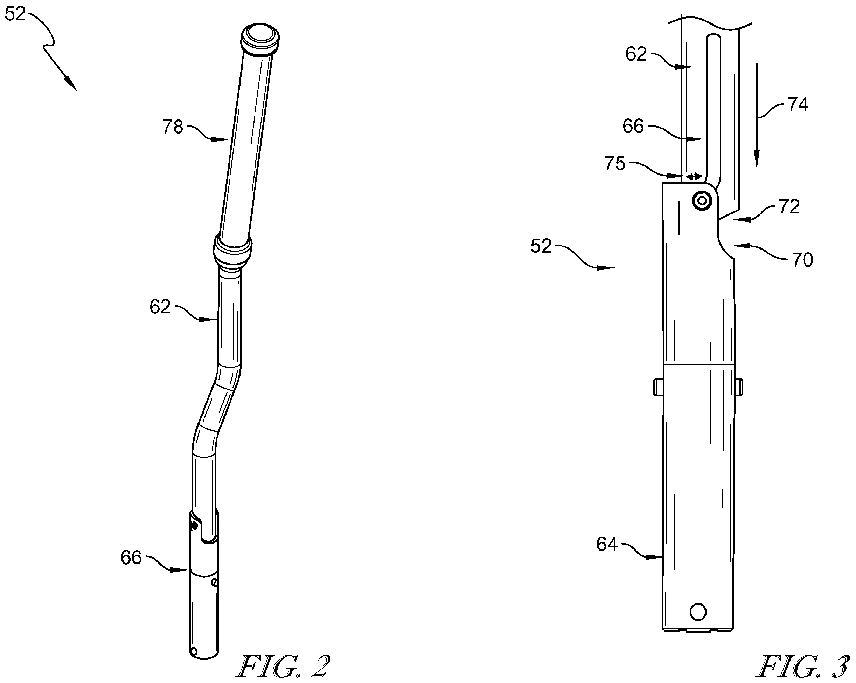

As shown in Figs. 2-5, the push handles 52 can include a handle 62 (e.g., first tube 62), a socket 64 (e.g., second tube 64), and a hand grip 78. The handle 62 has a smaller diameter than the socket 64 and can nest within the socket 64 when not in use. The handle 62 has a sliding slot 66. The handle 62 is configured to slide in and out of the socket 64 along the sliding slot 66.

The length of the push handle 52 can be adjusted by sliding the handle 62 along the sliding slot 66 into the socket 64. The handle 62 can be extended out of the socket so that the push handle 52 can be in upright use position as shown in Fig. 2.

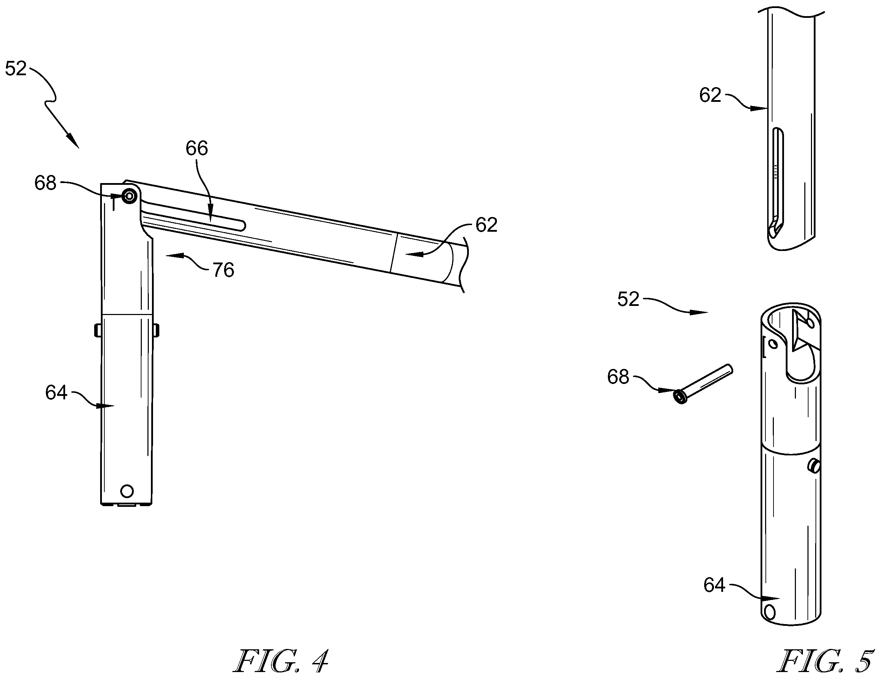

The handle 62 and the socket 64 are attached by a pivot pin 68 that is configured to move along the sliding slot 64. The sliding slot 66 is parallel to an axis 74 and then curves off-center. The pivot pin 68 is positioned off-center from the axis 74 along which the handle 62 is configured to slide into the socket 64. The pivot pin 68 is positioned at a distance 75 from the edge of the handle 62. The distance 75 is smaller than the radius of the handle 62. As shown in Fig. 5, the pivot pin is configured to extend through the socket 64 and the handle 62. The pivot pin 68 may be a slide pin 68. The length of the sliding slot 66 can be varied depending on the length of the handle 62 and socket 64.

The push handles 52 can be kept in a stowed position by sliding the handle 62 into the socket 64 when they are not being used to move the patient support apparatus 10. As shown in Figs. 3-5, the socket 64 includes a clearance notch 70 on a top portion 72 of the socket 64. The top portion 72 of the socket 64 is the side through which the handle 62 slides into the socket 64. When the handle 62 slides into the socket 64, the push handle 52 can be folded into the stowed position about the pivot pin 68 and through the clearance notch 70. To pivot the push handle 52 downwardly to an out-of-the-way stowed position, the handle 62 is first pushed back so that pivot pin 68 can align with the axis 74 and then moved downwards so that handle 62 slides into the socket 64 about the pivot pin 68 and along the sliding slot 66.

When the push handle 52 is folded in to the stowed position, the angle 76 between the handle 62 and the socket 64 can be less than 90 degrees so that the handle 62 does not impede patient care. The handle 62 may be laser cut and not manufactured by welding more than one component reducing the complexity and cost associated with manufacturing. In some embodiments of the patient support apparatus 10, other components including but not limited to IV poles comprising two nestable components may be designed similarly.

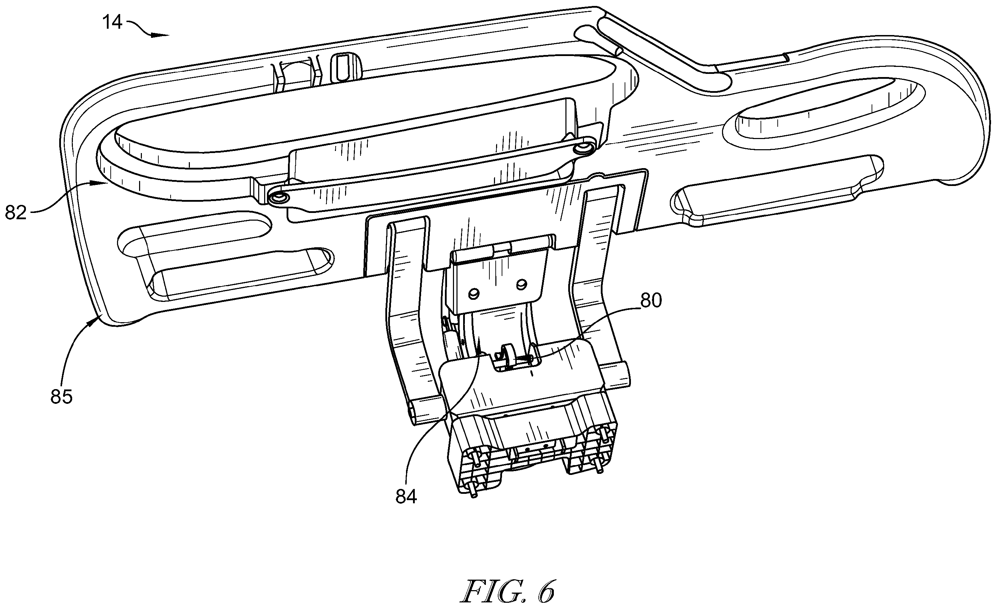

As shown in Fig. 1, the patient support apparatus 10 can include four siderails 14. As illustrated in Figs. 1 and 6, the siderail 14 includes a rail member 82 and a linkage assembly 84 coupled between rail members 82 and the head section 44 or the weigh frame 30. The linkage assembly 84 is configured to permit vertical movement of the rail member 82 with respect to the patient support apparatus 10. The rail members 82 each can be moved between an upper position and a lower position. Rail members 82 each include a body 85 defining a barrier when in a raised position. The body 85 may include a thermoplastic material supported by a rigid internal frame.

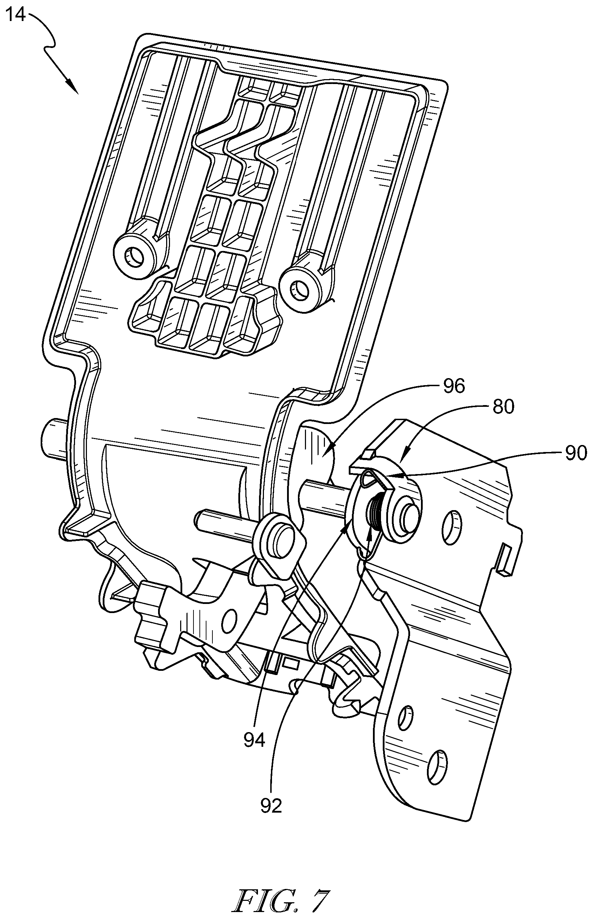

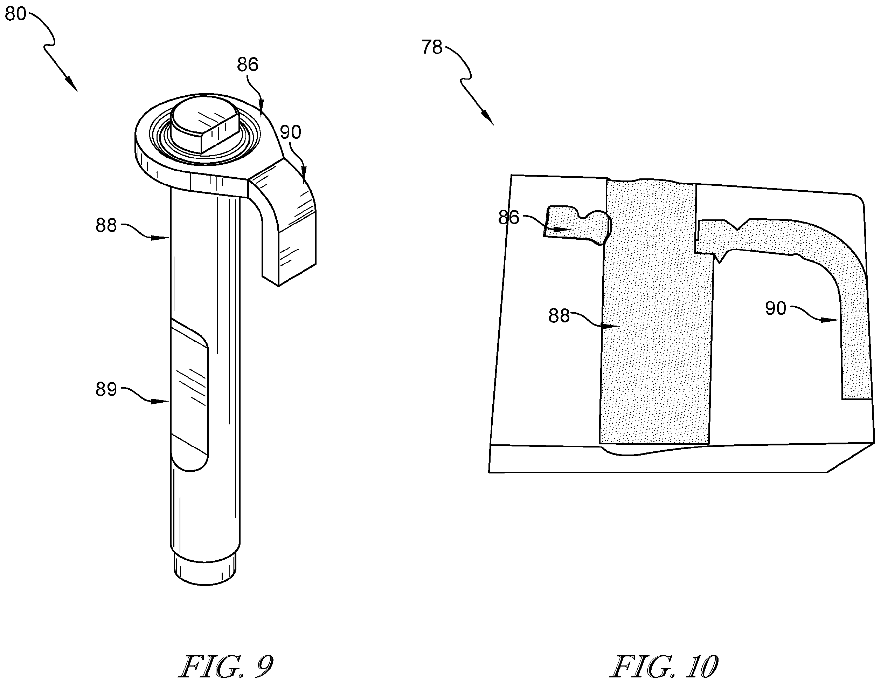

The linkage assembly 84 includes a latch pin 80 configured to move between a latched position and an unlatched position. As shown in Fig. 9, typically, the latch pin 80 comprises of two individual components. The latch pin 80 includes a head member or a bracket 86 coupled to a body member or a shaft 88. The bracket 86 includes a tab 90 and the shaft 88 includes an engaging section 89 that can be used to secure the siderail 14 is position. As shown in Fig. 7, the latch pin 80 can be pivotably coupled to the siderail 14. The latch pin 80 in the unlatched position permits vertical movement of the rail member 82 and the latch pin 80 in the latched position retains the siderail 14 in a vertical position. The patient support apparatus 10 can include a latch position indicator that is operably coupled to the latch pin 80 and is configured to provide an indication of the latch pin 80 being in the unlatched position.

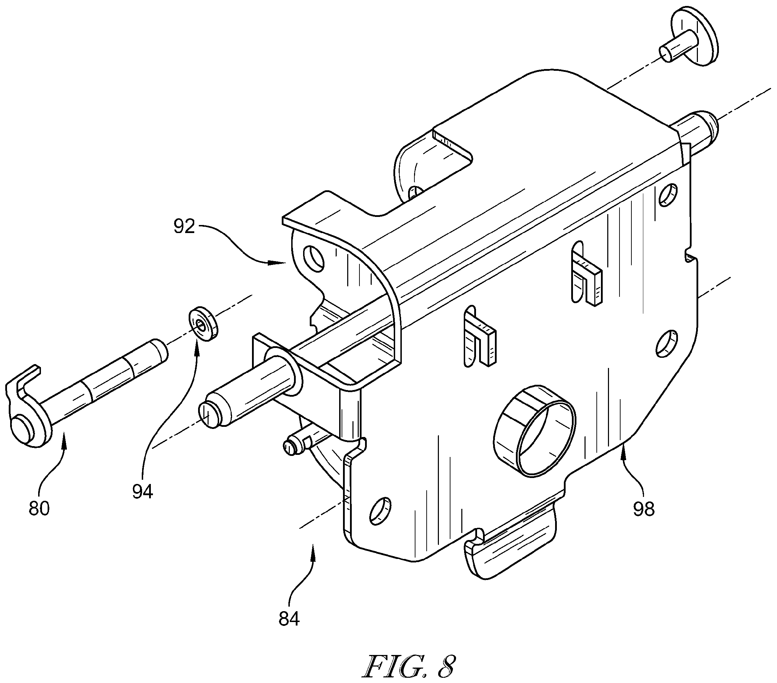

As shown in Figs. 7 and 8, the latch pin 80 is configured to engage a torsion spring 94 and extend through an aperture 92 in a lower mount 98 of the linkage assembly 84 to engage a locking hook 96 at the engaging section 89. The latch pin 80 can secure the siderail 14 in the vertical position and prevent a false latch. The tab 90 and the torsion spring 94 help in securing the siderail 14. If the locking hook 96 does not fully engage the latch pin 80 at the engaging section 89, the latch pin 80 can rotate making the siderail 14 to come undone and go back down to a lowered position.

The latch pins 80 are manufactured by crimping. The bracket 86 and the shaft 88 comprise a geometry that allows them to be crimped together instead of welded together. Crimping creates an interference fit between the bracket 86 and the shaft 88, and the bracket 86 is attached to the shaft 88 by displacing material towards the outside surface of the shaft 88. Further, crimping ensures that the union of the bracket 86 and shaft 88 can withstand torque applied on the tab 90 when the latch pin is being used to support the siderails 14 in the patient support apparatus 10. Fig. 10 shows a cross-section of a crimped latch pin 80.

In some embodiments, the shaft 88 and/or the bracket 86 may be deformed when they are attached to form the latch pin 80. In some embodiments, the shaft 88 may be smashed into the bracket 86 to displace material towards the inside diameter of the bracket 86. In both embodiments, the potential of weld spatter is eliminated. In some embodiments, the shaft 88 may be a pin 88. Thus, the risk of having a false latched siderail 14 due to a damaged latching surface with weld splatter is minimized. Other components of the patient support apparatus 10 may be created by crimping instead of welding.

Fig. 10 is step by step illustration of a method 100 implemented to manufacture a crimped latch pin 80. The method of manufacturing 100 the crimped latch pin 80 includes placing a first component of the latch pin 80 (e.g., bracket 86) in a crimping equipment in step 102. The method 100 further includes placing a second component of the latch pin 80 (e.g., shaft 88) in the crimping equipment in step 104. The method 100 includes applying pressure on the first component or the second component to form the crimped latch pin 80 in step 106. The crimped latch pin 80 is removed from the crimping equipment in step 108. The latch pins 80 can be used to latch different components of the patient support apparatus 10 including but not limited to the siderails 14.

Embodiments of the invention can be described with reference to the following numbered clauses, with preferred features laid out in the dependent clauses:
1. A patient support apparatus comprising:
   a frame having multiple support sections including a head section, a seat section, a thigh section, and a foot section, wherein the frame supports a mattress,
   a siderail configured to be attached to the frame on a latching surface by one or more latch pins comprised of a first component and a second component, and
   wherein each of the latch pins is manufactured by a method not comprising welding.
2. The patient support apparatus of clause 1, wherein the first component is a bracket, and the second component is a shaft.
3. The patient support apparatus of clause 2, wherein the bracket includes a tab configured to secure the siderail in a vertical position.
4. The patient support apparatus of either clause 2 or clause 3, wherein the shaft includes an engaging section configured to interact with a locking hook to secure the siderail in a vertical position.
5. The patient support apparatus of any preceding clause, wherein the one or more latch pins is manufactured by crimping.
6. The patient support apparatus of any preceding clause, wherein the latch pins are manufactured by smashing the second component to displace material towards an inside diameter of the first component.
7. The patient support apparatus of any preceding clause, wherein the latching surface does not comprise any weld splatter.
8. A method of manufacturing a latch pin comprising:
   attaching a first component of the latch pin with second component of the latch pin,
   displacing material towards an outer surface of the second component or towards an inner diameter of the first component, and
   creating an interference between the first component and the second component.
9. The method of clause 8, wherein the latch pin is manufactured by crimping.
10. The method of either clause 8 or clause 9, wherein the first component is a bracket, and the second component is a shaft.

## Claims

1. A patient support apparatus comprising:
a frame having multiple support sections including a head section, a seat section, a thigh section, and a foot section, wherein the frame supports a mattress,
a push handle including a first tube configured to slide inside a second tube along a sliding slot located in the first tube, and
wherein the push handle is configured to be folded into a clearance notch about a pin positioned off-center from an axis along which the first tube is configured to slide inside the second tube when the push handle is stowed.

2. The patient support apparatus of claim 1, wherein the pin is positioned in the sliding slot located in the first tube.

3. The patient support apparatus of either claim 1 or claim 2, wherein the pin is a slide pin.

4. The patient support apparatus of any preceding claim, wherein the sliding slot is cut with a tube laser.

5. The patient support apparatus of any preceding claim, wherein, the first tube is configured to be folded about the pin such that an angle between the first tube and the second tube is less than 90 degrees when the push handle is stowed.

6. The patient support apparatus of any preceding claim, wherein a length of the push handle can be adjusted by sliding the first tube along the sliding slot into the second tube.

7. The patient support apparatus of any preceding claim, wherein the clearance notch is positioned at a top portion of the second tube, and wherein the first tube is configured to slide into the second tube through the top portion.

8. The patient support apparatus of any preceding claim, wherein the first tube has a diameter smaller than the diameter of the second tube.

9. The patient support apparatus of any preceding claim, wherein the patient support apparatus comprises an IV pole that includes a first component configured to slide inside a second component along a slot located in the first component.

10. The patient support apparatus of any preceding claim further comprising a siderail configured to be attached to the frame on a latching surface by one or more latch pins comprised of a first component and a second component.

11. The patient support apparatus of claim 10, wherein the first component is a bracket, and the second component is a shaft.

12. The patient support apparatus of claim 11, wherein the bracket includes a tab configured to secure the siderail in a vertical position.

13. The patient support apparatus of either claim 11 or claim 12, wherein the shaft includes an engaging section configured to interact with a locking hook to secure the siderail in a vertical position.

14. The patient support apparatus of any one of claims 10 to 13, wherein the one or more latch pins is manufactured by crimping.

15. The patient support apparatus of any one of claims 10 to **14,** wherein the latch pins are manufactured by smashing the second component to displace material towards an inside diameter of the first component.
